# EUROPÄISCHE PATENTANMELDUNG

(11) **EP 1 120 445 A2**
(43) Veröffentlichungstag der Anmeldung: **01.08.2001**
(21) Anmeldenummer: 01101054.3
(22) Anmeldetag: 18.01.2001
(51) Int. Cl.: C09D 11/00, B41F 33/00

(54) **Satz von Druckfarben und Farbensteuerungsverfahren für den Offset-Druck**

(30) Priorität: 25.01.2000 DE 10003071
(71) Anmelder: Carl Epple Druckfarbenfabrik GmbH & Co. KG, 86356 Neusäss /Augsburg (DE)
(72) Erfinder: Kirchner, Dieter, 14129 Berlin (DE); Epple, Carl Dr., 86150 Augsburg (DE)
(74) Vertreter: Hoeger, Stellrecht & Partner

(57) **Zusammenfassung**

Um einen Satz von Druckfarben, welcher die Farbtöne Yellow (Y), Rot oder Magenta (M), Cyan (C) und Schwarz (K) umfaßt, zu schaffen, mit welchem sich beim Druck Dichteumfänge größer als 1,8 erreichen lassen, ist vorgesehen, daß der Abstand der optischen Dichte der Druckfarbe mit dem Farbton Schwarz zu der Dichte der Druckfarbe mit dem dichtesten Buntton im Druck 0,5 ist.

## Beschreibung

Die Erfindung betrifft einen Satz von Druckfarben, welcher die Farbtöne Yellow, Rot oder Magenta, Cyan und Schwarz umfaßt.

Ferner betrifft die Erfindung ein Farbensteuerungsverfahren für den Offset-Druck, bei welchem ein erster Farbraum mittels einer Transformationstabelle in einen zweiten Farbraum transformiert wird, wobei eine Vorlage Farbvalenzen des ersten Farbraums umfaßt und die Farbtöne der Druckfarben Skalenfarben-Farbtöne des zweiten Farbraums sind.

Der Informationsgehalt eines Bildes ist durch seinen Kontrastumfang bestimmt. Dieser wird als Dichteumfang gemessen, wobei die Dichte definiert ist als Zehner-Logarithmus des reziproken Reflexionsgrades, der das Verhältnis der Reflexion zu der Reflexion eines Referenzweißes darstellt. Der Reflexionsgrad gibt somit das Verhältnis zwischen den Lichtreflexionen einer zu messenden Probe und einem Referenzwert an.

Diapositive weisen einen wahrnehmbaren Dichteumfang im Bereich von 3,0 auf und Fotografien im Bereich von 2,4. In H. Teschner, Offset-Drucktechnik, Fellbach, 10. Auflage 1997 ist auf der Seite 6/10 angegeben, daß ein Dichteumfang von 1,8 im industriellen Druck die Grenze darstellt.

Davon ausgehend liegt der Erfindung die Aufgabe zugrunde, einen Satz von Druckfarben und ein Farbensteuerungssystem zu schaffen, mit welchem sich Dichteumfänge größer als 1,8 erreichen lassen.

Diese Aufgabe wird bei einem Satz von Druckfarben der eingangs genannten Art erfindungsgemäß dadurch gelöst, daß der Abstand der optischen Dichte der Druckfarbe mit dem Farbton Schwarz zu der Dichte der Druckfarbe mit dem dichtesten Buntton im Druck 0,5 ist.

Es hat sich gezeigt, daß bei der Verwendung von Druckfarben, bei denen dieser Abstandswert vorliegt, sich Dichteumfänge von 2,2 und höher erreichen lassen. Dieser Wert 0,5 ist dabei vermutlich durch die physiologischen Eigenschaften des Farbensehens des Menschen bestimmt, d. h. insbesondere durch die Anordnung und Ausbildung der Stäbchen und Zäpfchen im Auge und durch die Signalverarbeitung im Gehirn. Es scheint so zu sein, daß dieser Wert universell ist.

Bei einer Variante einer Ausführungsform ist der Farbton der dichtesten Buntfarbe Cyan.

Weiterhin ist es besonders vorteilhaft, wenn der Abstand der optischen Dichte zwischen Buntfarben mit benachbarten Dichtewerten 0,1 ist oder, wenn dieser Abstand größer ist, möglichst dicht bei 0,1 liegt. Dieser Wert von 0,1 scheint ebenfalls durch die Eigenschaften des menschlichen Farbsehsystems bestimmt zu sein. Bei entsprechend hergestellten Druckfarben läßt sich dann ein hoher Dichteumfang beim Drucken erreichen. Es kann dabei vorkommen, daß bei einer hohen Dichte einer Druckfarbe ein Skalenfarbton, wenn der Abstandswert 0,1 gewählt wurde, für das menschliche Auge nicht mehr unterscheidbar ist von gleichen Farbtönen mit niedrigeren Dichtewerten. So ist beispielsweise ein Gelb-Farbton mit der Dichte 2,3 nicht unterscheidbar von einem mit dem Wert 2,0. Es ist daher in einem solchen Fall sinnvoll, von der genannten Regel abzuweichen, um die Herstellungskosten der Druckfarbe niedrig zu halten und die Handhabung beim Druck zu erleichtern; der Abstand sollte dann möglichst dicht bei einem Wert von 0,1 gewählt werden.

Um einen hohen Dichteumfang zu erreichen, ist es besonders vorteilhaft, wenn die optische Dichte der Druckfarbe in dem Farbton Schwarz mindestens 2,3 ist.

Druckfarben werden üblicherweise aus einer Mischung eines Bindemittels, eines Farbmittels und von Druckhilfsmitteln hergestellt. Bei einem ersten Ausführungsbeispiel eines erfindungsgemäßen Satzes von Druckfarben gemäß einem der Ansprüche 5 bis 37 sind die genannten Voraussetzungen erfüllt. Die Farben werden insbesondere vorteilhafterweise dadurch hergestellt, daß der Farbmittelanteil als Pigmentanteil im Bereich zwischen 10 % und 30 % in der Druckfarbe liegt. Vorteilhafterweise umfaßt das Bindemittel phenolmodifiziertes Kolophoniumharz gelöst in Ölen, wie Mineralöl, pflanzlichen Ölen oder deren Derivaten.

Der Satz von Druckfarben gemäß dem ersten Ausführungsbeispiel erfüllt bei einem Dichteumfang bis 1,9 die DIN 16539, betreffend eine Farbskala für den Offset-Druck, wobei die entsprechenden Farben auch als Euroskala bezeichnet werden. Dadurch läßt sich der erfindungsgemäße Satz von Druckfarben sowohl bei niederem Dichteumfang "konventionell" einsetzen als auch bei höherem Dichteumfang.

Bei einem zweiten Ausführungsbeispiel eines erfindungsgemäßen Satzes von Druckfarben gemäß einem der Ansprüche 38 bis 66 liegt der Farbmittelanteil vorteilhafterweise als Pigmentanteil im Bereich zwischen 15 % und 40 %. Das Bindemittel umfaßt modifiziertes Phenolharz in Öl verwendet. Als Öl kann Mineralöl, pflanzliches Öl oder deren Derivate zum Einsatz kommen.

Bei einem solchen Satz von Druckfarben erhält man aufgrund des hohen Pigmentanteils einen sehr hohen Dichteumfang, der 2,4 oder mehr betragen kann. Es wurden bereits Dichteumfänge von 2,8 bis 3,0 erreicht.

Die eingangs genannte Aufgabe wird bei dem gattungsgemäßen Farbensteuerungsverfahren erfindungsgemäß dadurch gelöst, daß die Transformationstabelle so bestimmt ist, daß der Farbraumumfang des zweiten Farbraums derart mit der optischen Dichte der Skalenfarben korreliert ist, daß der Farbraumumfang des zweiten Farbraums bei Erhöhung des Dichteumfangs beim Druck zunimmt.

Durch das erfindungsgemäße Verfahren wird verhindert, daß sich bei Erhöhung des Dichteumfangs beim Druck der Farbraum verkleinert, d. h. es ist erfindungsgemäß erreichbar, daß Farbtöne im Zusammendruck auch bei zunehmender Dichte nicht verschmutzen. Auch bei hohem Dichteumfang, d. h. hohem Kontrastumfang, läßt sich dadurch ein Farbdruck realisieren. Durch ein Druckverfahren gelangt man dabei in den Kontrastumfang, der auf dem Gebiet der Fotografie bekannt ist.

Vorteilhafterweise ist dabei der Dichteumfang beim Druck mindestens 2,2, um einen hohen Informationsgehalt im Bild zu erhalten.

Ganz besonders vorteilhaft ist es, wenn die optische Dichte von Schwarz bezogen auf eine Standarddichte 2,4 ist. Dadurch läßt sich ein Satz von Druckfarben verwenden, der bei einem kleineren Dichteumfang (1,9 oder kleiner) die Eigenschaften einer Euroskala hat, während trotzdem ein Dichteumfang höher als 1,9 erreichbar ist, wenn dies gewünscht wird.

Bei einer weiteren Ausführungsform ist die optische Dichte von Schwarz bezogen auf eine Standarddichte 3,0. Dadurch läßt sich beim Druck ein sehr hoher Dichteumfang erreichen.

Günstigerweise ist der erste Farbraum ein R, G, B-Farbraum und der zweite Farbraum ein C, M, Y, K-Farbraum. Üblicherweise sind in einer Vorlage die Farbvalenzen bezogen auf eine R, G, B-Darstellung (additive und/oder subtraktive Farbmischung), und der Offset-Druck erfolgt mit Druckfarben, die die Skalentöne des C, M, Y, K-Farbraums aufweisen (autotypische Farbenmischung).

Ganz besonders vorteilhaft ist es, wenn der Dichteumfang beim Druck durch Einstellung der Dichte der Skalenfarben im Druck eingestellt wird. Dadurch lassen sich fotografische Methoden in den Bereich des Druckens übertragen. In der Fotografie wird beispielsweise durch Veränderung der Blende der Kontrastumfang in einem Bild einheitlich geändert. Beim Drucken war es bisher so, daß keine einheitliche Änderung durchführbar war, da der Farbraumumfang bei Änderung der Dichte und der Dichteumfang einer oder mehrerer Druckfarben sich nicht proportional veränderte. Bei dem erfindungsgemäßen Verfahren wird jedoch der Farbraumumfang gezielt eingestellt.

Erfindungsgemäß kann eine einheitliche Änderung des Dichteumfangs im Druck um einen bestimmten Wert durch Änderung der Dichte jeder Skalenfarbe im Druck durch jeweils im wesentlichen den gleichen Wert bewirkt werden. Beispielsweise kann die Dichte jeder Druckfarbe um einen bestimmten Wert wie 0,3 erniedrigt werden, so daß sich insgesamt eine einheitliche Erniedrigung des Dichteumfangs eines Gesamtdruckbildes ergibt. Die einheitliche Erniedrigung hat die Wirkung wie die Schließung einer Blende in der Fotografie.

Vorteilhafterweise wird zur Bestimmung der Transformationstabelle von einer vorbekannten Tabelle ausgegangen, werden die Farbraumvalenzen des zweiten Farbraums ausgedruckt und vermessen, und iterativ werden bestimmte Tabellenwerte so modifiziert, daß sich der Farbraum des zweiten Farbraums bei Erhöhung des Dichteumfangs erweitert und insbesondere die größere Gestalt des Farbraums (der Umriß) erhalten bleibt.

Vorteilhafterweise wird beim Drucken der Farbton Schwarz als letztes gedruckt. Dadurch läßt sich ein hoher Dichteumfang erreichen.

Ganz besonders vorteilhaft läßt sich das erfindungsgemäße Farbensteuerungsverfahren in Zusammenwirken mit den erfindungsgemäßen Sätzen von Druckfarben gemäß einem der Ansprüche 1 bis 66 verwenden. Die erfindungsgemäßen Sätze von Druckfarben sind auf das Farbensteuerungssystem abgestimmt, und insbesondere ist die Transformationstabelle darauf abgestimmt. Die erfindungsgemäßen Sätze von Druckfarben erfüllen einerseits die Voraussetzungen für das Farbensteuerungsverfahren und andererseits weisen sie die notwendigen, für den industriellen Gebrauch unumgänglichen Eigenschaften wie hohe Farbkraft und Glanz, sich schnell einstellende Farb-Wasser-Balance, hohe Konstanz bei hervorragenden Übertragungseigenschaften und schnelle und sichere Weiterverarbeitung auf.

Die nachfolgende Beschreibung bevorzugter Ausführungsformen dient im Zusammenhang mit der Zeichnung der näheren Erläuterung der Erfindung. Es zeigen:
- Figur 1: eine Farbtafel mit dem Farbraum eines Satzes von bekannten Druckfarben bei einem Dichteumfang beim Druck von 1,9 und 2,2;
- Figur 2: eine Farbtafel mit einem Farbraum von einem ersten Ausführungsbeispiel eines erfindungsgemäßen Satzes von Druckfarben bei einem Druck mit dem Dichteumfang von 1,9 im Vergleich zu dem Farbraum von bekannten Druckfarben gemäß Figur 1 bei dem gleichen Dichteumfang;
- Figur 3: eine Farbtafel mit einem Farbraum von erfindungsgemäßen Druckfarben gemäß dem ersten Ausführungsbeispiel bei einem Dichteumfang von 2,4 im Vergleich zu dem Farbraum von aus dem Stand der Technik bekannten Farben bei einem Dichteumfang von 1,9;
- Figur 4: eine Farbtafel mit einem Farbraum eines Satzes von erfindungsgemäßen Druckfarben gemäß dem ersten Ausführungsbeispiel bei einem Dichteumfang von 2,4 beim Druck im Vergleich zu einem Dichteumfang bei 1,9;
- Figur 5: eine schematische Darstellung einer Transformation von einem ersten Farbraum zu einem zweiten Farbraum und
- Figur 6: eine Farbtafel mit einem Farbraum eines zweiten Ausführungsbeispiels eines erfindungsgemäßen Satzes von Druckfarben bei einem Dichteumfang von 2,8 beim Drucken im Vergleich zu den Farbräumen von Druckfarben gemäß Figur 1 und 3.

Eine Druckfarbe insbesondere zur Verwendung beim Offset-Druck umfaßt die Bestandteile Bindemittel in flüssiger Form, Farbmittel in fester Form, wobei es sich insbesondere um Pigmente handelt, und Druckhilfsmittel. Üblicherweise wird eine Druckfarbe dadurch hergestellt, daß die Bestandteile Farbmittel, Bindemittel und Druckhilfsmittel gemischt werden, wobei zuerst eine Vormischung/Vordispergierung stattfindet, indem die Komponenten angerührt und vermischt werden, danach eine Dispergierung stattfindet, um für eine homogene Benetzung der Pigmente durch das Bindemittel zu sorgen, danach zur Entfernung von Lufteinschlüssen entlüftet wird und schließlich die Druckfarbe abgefüllt wird.

Für den Vierfarbendruck muß ein Satz von Druckfarben mit vier verschiedenen Farbtönen bereitgestellt werden. Bei einem ersten Ausführungsbeispiel eines Satzes von Druckfarben mit den Farbtönen Cyan C, Magenta M, Yellow Y und Schwarz K umfaßt das Bindemittel ein phenolmodifiziertes Kolophoniumharz gelöst in Sojaöl, wobei der Bindemittelanteil an einer Druckfarbe im Bereich zwischen 55 % und 80 % liegt. Der Anteil an Kolophoniumharz gelöst in Öl liegt dabei zwischen ca. 45 % und 70 % und insbesondere zwischen 52 und 57 %.

Der Anteil des phenolmodifizierten Kolophoniumharzes in der Druckfarbe liegt im Bereich zwischen 25 % und 40 %. Der Anteil von Öl zum Kolophoniumharz liegt etwa im Verhältnis 50:50, wobei auch Anteile 45:55 und 55:45 verwendbar sind.

Anstatt Sojaöl können auch andere Öle und insbesondere pflanzliche Öle oder deren Derivate verwendet werden.

Die Druckfarbe mit dem Farbton Cyan weist einen Pigmentanteil als Farbmittelanteil von 15 % und insbesondere 16 % bis 22 % auf, wobei Pigmente mit dem Colourindex P.B.15.3 und der CAS-Nr. 147-14-8 verwendet werden.

Die Druckfarbe mit dem Farbton Magenta weist einen Pigmentanteil im Bereich zwischen 17 % und insbesondere 18 % bis 25 % auf, wobei rote Pigmente mit dem Colourindex P.R.57.1 und der CAS-Nr. 5281-04-9 verwendet werden.

Die Druckfarbe mit dem Farbton Yellow weist einen Pigmentanteil von 12 % und insbesondere 14 % bis 20 % auf, wobei Pigmente Gelb mit dem Colourindex P.Y.13 und der CAS-Nr. 5102-83-0 und/oder mit dem Colourindex P.Y.74 und der CAS-Nr. 6358-31-2 verwendet werden.

Der Farbton Schwarz umfaßt einen Anteil im Bereich zwischen 17 % und insbesondere 20 % bis 25 % an Ruß als Farbmittel, wobei zusätzlich zur Schönung ein Anteil von 2 % bis 10 % EuroBlau (Colourindex P.B.15.3; CAS-Nr. 147-14-8) und/oder EuroRot (Colourindex P.R.57.1; CAS-Nr. 5281-04-9) und/oder Reflexblau (Colourindex P.B.61; CAS-Nr. 1324-76-1) in der Druckfarbe enthalten ist. Dadurch kann die Druckfarbe Schwarz auch mit allen Echtheiten hergestellt werden. (Die Echtheit ist ein Maß für die chemische Beständigkeit der Druckfarbe.)

Die Bindemittel umfassen auch mit einem Anteil von ca. 3 % bis 10 % in der Druckfarbe sojaölbasierendes Alkydharz mit einer Öllänge zwischen 50 % und 70 % und insbesondere von ca. 60 %, wobei die Öllänge der Massenanteil des Öles an der Zusammensetzung ist. (Das heißt, das Sojaöl stellt im letzteren Fall einen Gewichtsanteil von 60 % in dem sojaölbasierenden Alkydharz dar. Der restliche Anteil umfaßt u. a. Phtalsäure, Glycol und Pentaerythrit.)

Weiterhin ist als Bindemittel mit einem Anteil von ca. 3 % bis 10 % leinölbasierendes Alkydharz mit einer Öllänge zwischen 60 % und 80 % und insbesondere von ca. 70 % vorgesehen. Die Bindemittel umfassen ferner leinöl- und holzölbasierendes Alkydharz mit einer Öllänge zwischen 50 % und 70 % und insbesondere von ca. 60 % mit einem Anteil von ca. 3 % bis 10 % in der Druckfarbe.

Der Anteil an Druckhilfsmitteln ist bei allen Druckfarben gleich und liegt im Bereich zwischen 5 % und 15 %.

Die Druckhilfsmittel umfassen ein Antioxidans mit einem Anteil von ca. 0,25 % bis 3 % in der Druckfarbe. Beispielsweise wird Buthylhydroxitoluol als Antioxidans eingesetzt. Leinöl ist mit einem Anteil zwischen 1 % und 5 % und insbesondere ca. 3 % enthalten.

Die Druckhilfsmittel umfassen ferner einen Trockner mit einem Metallgehalt von 0,2 % bis 1 % Cobalt und 0,6 % bis 3 % Mangan jeweils bezogen auf die Druckfarbe. Cobalt dient als Oberflächentrockner und Mangan als Innentrockner. Das Cobalt wird beispielsweise in der Form von Kobaltoktoat (CAS-Nr. 136-52-7) und das Mangan beispielsweise in der Form von Manganoktoat (CAS-Nr. 6535-19-9) zugefügt. Die Metallverbindungen im Trockner sind in Öl wie Leinöl, anderen pflanzlichen Ölen oder deren Derivaten und/oder Mineralöl gelöst.

Zur Erzielung einer glatten, die Reibung verringernden Oberfläche ist ein Scheuerschutz vorgesehen, welcher einen Anteil im Bereich zwischen 2 % und 8 % und insbesondere von ca. 4 % in der Druckfarbe umfaßt. Dieser Scheuerschutz basiert auf einer Paste aus Teflon und/oder Polyethylen und/oder Fischer-Tropsch-Wachs mit einem Anteil von ca. 25 % bis 40 % in Hartharz und/oder Alkydharz und/oder Öl. Bei dem Öl kann es sich beispielsweise um ein Mineralöl mit einem Siedebereich zwischen 280°C und 310°C handeln.

Die Druckhilfsmittel umfassen bei allen Farbtönen im wesentlichen die gleichen Anteile. Der Bindemittelanteil wird bei den verschiedenen Farbtönen jeweils entsprechend auf 100 % eingestellt.

Der erfindungsgemäße Satz von Druckfarben gemäß dem ersten Ausführungsbeispiel weist die in der folgenden Tabelle zusammengefaßten Eigenschaften auf:

| Farbton | Dichte | Schichtdicke [g/m²] | Glanzpunkte 60° | Tack | Viskosität 23°C, 1/10s [Pa s] |
|---|---|---|---|---|---|
| Gelb (Yellow) | 1,6 | 1,1 | 57,3 | 8-8,5 | 120 |
| Cyan | 1,8 | 1,08 | 48,2 | 9 | 105 |
| Magenta | 1,7 | 1,29 | 55,2 | 9 | 130 |
| Schwarz | 2,3 | 1,5 | 55,1 | 9 | 70 |

Die Dichte ist eine optische Dichte (auch Farbdichte genannt). Sie ist bestimmt durch das logarithmische Verhältnis der Lichtabsorption durch ein Vergleichsweiß zur Lichtabsorption der gemessenen Farbschicht und definiert als der Zehnerlogarithmus des reziproken Reflexionsgrades, welcher wiederum der Quotient aus der Reflexion der untersuchten Druckfarbe und der Reflexion des Referenzweißes ist. Die Dichte einer Druckfarbe vom Druck hängt grundsätzlich auch von der Schichtdicke der aufgebrachten Farbe ab. Die in der Tabelle aufgeführten Werte sind Standarddichten; es sind die empfohlenen Werte, bezüglich derer die Farben optimiert sind. Eine Druckmaschine sollte dann so eingestellt werden, daß die Druckfarben mit den angegebenen Schichtdicken gedruckt werden.

Auch bereits bei vergleichsweise geringen Schichtdicken erreichen die Druckfarben eine hohe Dichte. Dies zeigt die gute Übertragungsfähigkeit der Pigmente von Bindemittel auf das Papier, so daß die erfindungsgemäßen Druckfarben trotz ihrer hohen Pigmentkonzentration eine gute Übertragungsfähigkeit aufweisen.

Die Glanzpunkte wurden bei einer 60°-Reflexion gemessen und stellen Prozentzahlen dar. Trotz des hohen Pigmentgehalts weist der erfindungsgemäße Satz von Druckfarben einen unerwartet hohen Glanz auf.

Der Tack ist ein Maß für die Klebekraft der Druckfarbe. Er wurde mit dem Präzisionsfarbzügigkeitsmeßgerät "Incomat 90" der Firma Prüfbau Dr. Ing. H. Dürner, Peisenberg, gemessen. Die aufgeführten Tackwerte weisen eine Meßungenauigkeit von +/- 0,5 auf. Die Tackwerte zeigen, daß der erfindungsgemäße Satz an Druckfarben eine praxisgerechte Klebekraft aufweist.

Die erfindungsgemäßen Druckfarben zeigen einen Punktzuwachs bei hohen Dichten; beim Offset-Druck werden verschiedene Farbpunkte zum Teil überlagert. Insbesondere bei großer Schichtdicke tritt dann eine mechanische Belastung der unteren Farbpunkte auf, die zu einer Quetschung dieser Punkte führen kann, was wiederum zu einer nicht gewünschten Veränderung des Farbeindruckes führen kann. Bei den erfindungsgemäßen Druckfarben hat es sich gezeigt, daß die "Quetschung" trotz verhältnismäßig hoher Schichtdicke kleiner als ca. 14 % ist, so daß entsprechend durch die Übereinanderschichtung von verschiedenen Farbpunkten der gewünschte Farbeindruck nicht durch mechanische Verformungen von unteren Farbpunkten verändert wird.

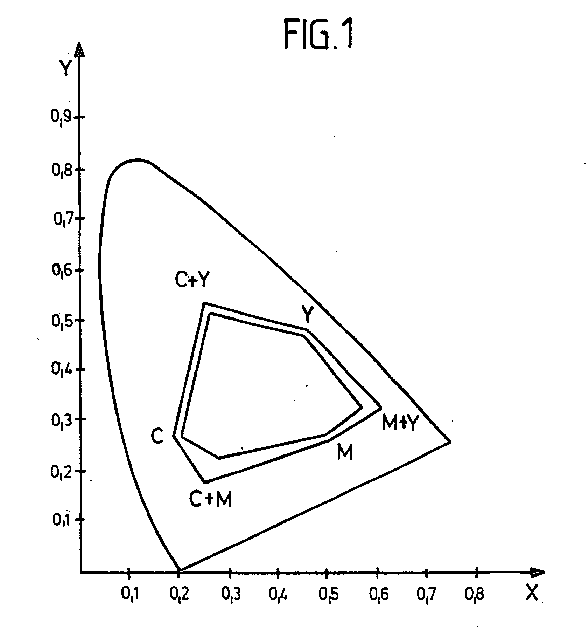

In Figur 1 ist eine Farbtafel in der üblichen x-y-Darstellung (siehe beispielsweise M. Richter, "Farbmetrik" in Bergmann, Schäfer, Lehrbuch der Experimentalphysik, Band III Optik, 8. Auflage, Berlin, New York 1987) für einen bekannten Satz von Druckfarben gezeigt. Ein Farbraum 10 für die Skalenfarben Yellow Y, Cyan C, Magenta M und Schwarz K ist für einen Dichteumfang beim Druck von 1,9 dargestellt, sowie ein weiterer Farbraum 12 für einen Dichteumfang von 2,2 beim Druck. Man sieht, daß der Farbraumumfang bei höherem Druckdichteumfang abnimmt und insbesondere im Bereich von Blau und Rosa (C, C+M, M) sich die äußere Form des Farbraums stark verändert.

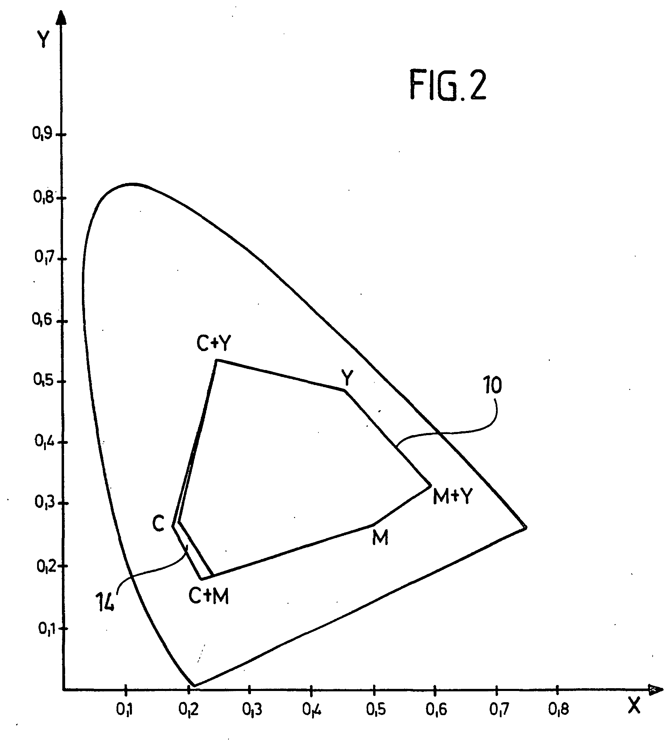

In Figur 2 ist in einer entsprechenden Farbtafel wiederum der Farbraum 10 für einen bekannten Satz von Druckfarben gezeigt, wobei dieser Satz von Druckfarben der in der DIN-Norm 16539 festgelegten Euronorm-Farbskala genügt. Der Farbraum des erfindungsgemäßen Satzes von Druckfarben gemäß dem ersten Ausführungsbeispiel ist im Vergleich dazu mit 14 bezeichnet eingezeichnet, wobei er wie der Farbraum 10 für einen Druckdichtenumfang von 1,9 gezeigt ist. Man erkennt, daß der Farbraum 10 und der Farbraum 14 im wesentlichen zusammenfallen, nur im Bereich Cyan und Cyan + Magenta ist der Farbraum 14 des erfindungsgemäßen Satzes von Druckfarben etwas größer. Der Satz von erfindungsgemäßen Druckfarben erfüllt daher bei dieser Dichte 1,9 die genannte Norm, d. h. weist die Eigenschaften einer Euroskala auf.

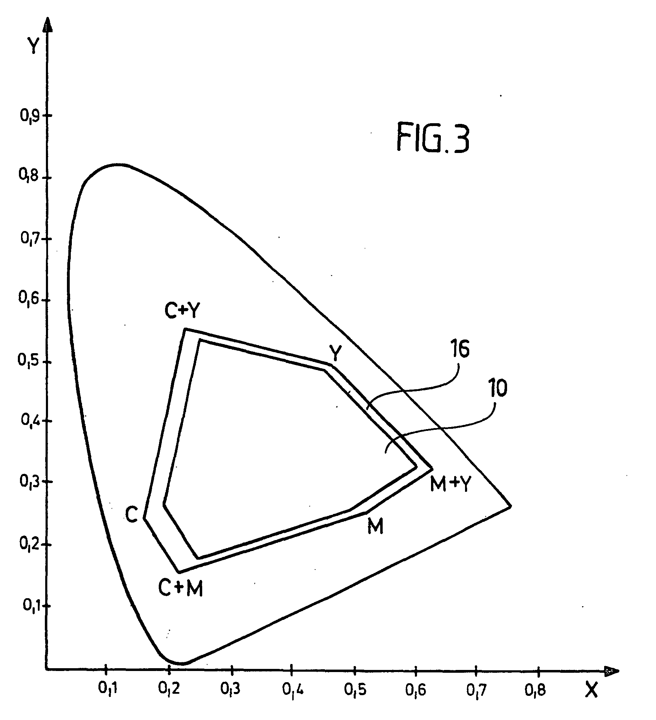

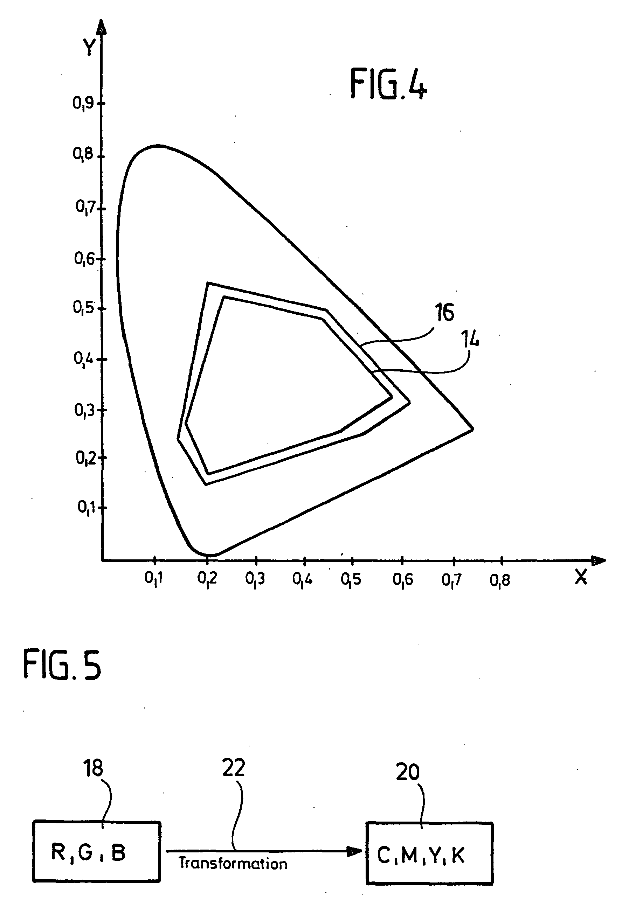

In Figur 3 ist der Farbraum 10 eines bekannten Satzes von Druckfarben bei einem Dichteumfang von 1,9 beim Druck im Vergleich zu dem Farbraum 16 bei dem erfindungsgemäßen Satz von Druckfarben gemäß dem ersten Ausführungsbeispiel gezeigt, wobei der Dichteumfang 2,4 ist. Wie man sieht, nimmt der Farbraumumfang bei Erhöhung des Dichteumfangs zu. Die Zunahme liegt bei etwa 20 % und die Gestalt des Farbraums bleibt im wesentlichen erhalten (vgl. Figur 4). Dies bedeutet, daß anders als bei bekannten Farben (vgl. Figur 1) die Farbtöne im Zusammendruck mit zunehmenden Dichten nicht verschmutzen, so daß mit dem erfindungsgemäßen Satz von Druckfarben auch mit einem hohen Dichteumfang gedruckt werden kann.

Der Satz von erfindungsgemäßen Druckfarben ist so eingestellt, daß sich bei der Druckreihenfolge Cyan, Magenta, Yellow und zuletzt Schwarz ein optimales Ergebnis ergibt.

Der erfindungsgemäße Satz von Druckfarben weist eine hohe Farbtontoleranz auf. Die Farbtontoleranz wird noch dadurch verbessert, daß sich beim Drucken mit hoher Dichte Schwankungen in der Druckmaschine geringer auswirken als beim Drucken mit niedrigen Dichten.

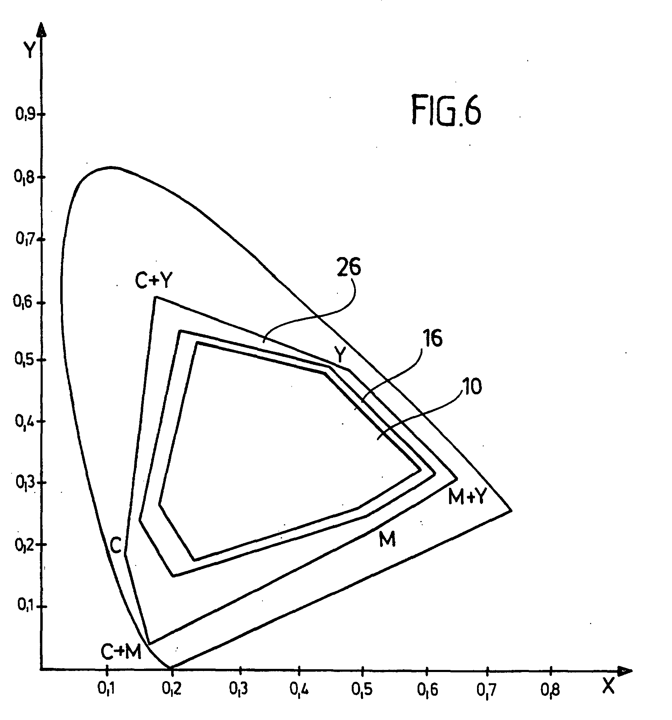

An den erfindungsgemäßen Satz von Druckfarben gemäß dem ersten Ausführungsbeispiel ist eine spezielle Transformationstabelle angepaßt, die, wie in Figur 5 schematisch gezeigt, bei der Transformation eines ersten Farbraums 18 in einen zweiten Farbraum 20 benötigt wird. Der erste Farbraum 18 weist insbesondere als Skalenfarben Rot, Grün und Blau auf, wobei eine Vorlage Farbvalenzen dieses ersten Farbraums 18 umfaßt. Der Farbeindruck im ersten Farbraum entsteht durch additive Farbenmischung und/oder durch subtraktive Farbenmischung. Der zweite Farbraum 20 weist die Skalenfarbtöne Cyan, Magenta, Yellow und Schwarz auf, welche die Farbtöne des Satzes von Druckfarben sind. Der Farbeindruck in einem Druck entsteht durch autotypische Farbenmischung. Die Transformationstabelle 22 bewirkt die Transformation von Farbvalenzen aus dem ersten Farbraum 18 in Farbvalenzen des zweiten Farbraums 20. Dies wird untenstehend noch näher erläutert.

Bei einem zweiten Ausführungsbeispiel eines erfindungsgemäßen Satzes von Druckfarben umfaßt das Bindemittel modifiziertes Phenolharz in Mineralöl und liegt mit einem Anteil von insbesondere 30 % bis 70 % in einer Druckfarbe vor.

Statt Mineralöl kann auch Pflanzenöl oder Derivate davon verwendet werden.

Die Druckfarbe mit dem Farbton Cyan weist einen Pigmentanteil von 20 % bis 28 % auf, wobei Pigmente mit einem Colourindex P.B.15.3 mit der CAS-Nr. 147-14-8 verwendet werden.

Die Druckfarbe mit dem Farbton Rot weist einen Pigmentanteil von 25 % und insbesondere 29 % bis 40 % auf, wobei die Pigmente die CAS-Nr. 75627-12-2 mit Colourindex P.R.81.2 haben und/oder die CAS-Nr. 5281-04-9 mit Colourindex P.R.57.1.

Die Druckfarbe mit dem Farbton Yellow hat einen Farbmittelanteil zwischen 16 % und 25 %, wobei die Pigmente den Colourindex P.Y.13 haben und die CAS-Nr. 5102-83-0 ist und/oder den Colourindex P.Y.74 und die CAS-Nr. 6358-31-2 haben.

Die Druckfarbe mit dem Farbton Schwarz schließlich weist einen Rußanteil von 18 % und insbesondere 20 % bis 27 % auf, wobei eine Schönung im Bereich zwischen 5 % und 15 % mit EuroBlau (Colourindex PB.15.3; CAS-Nr. 147-14-8) und/oder EuroRot (Colourindex P.R.57.1; CAS-Nr. 5281-04-9) und/oder Reflexblau (Colourindex P.B.61; CAS-Nr. 1324-76-1) vorgesehen ist, so daß Schwarz auch mit allen Echtheiten hergestellt werden kann.

Die Bindemittel umfassen auch auf Leinöl und Holzöl basierendes Alkydharz mit einer Öllänge zwischen 50 % und 70 % und insbesondere von ca. 60 %, wobei der Anteil in der Druckfarbe ca. 15 % beträgt. Ferner ist leinölbasierendes Alkydharz mit einer Öllänge von ca. 73 % in einem Anteil von ca. 3 % vorgesehen. Die Bindemittel umfassen auch leinöl- und sojaölbasierendes Alkydharz mit einer Öllänge zwischen 72 % und 82 % und insbesondere von ca. 77 %, das mit einem Anteil von ca. 3 % in der Druckfarbe enthalten ist.

Der Anteil an Druckhilfsmitteln ist für alle Druckfarben des Satzes gleich und liegt etwa zwischen 5 % und 15 %. Es ist Leinöl mit einem Anteil von 3 % bis 5 % vorgesehen. Es kann auch ein Antioxidans als weiteres Additiv vorgesehen sein.

Die Druckhilfsmittel umfassen auch einen Trockner, welcher einen Metallanteil von ca. 0,8 % bis 4 % bezogen auf die Druckfarbe aufweist. Beispielsweise ist mit einem Anteil von 0,2 % bis 1 % Cobalt und einem Anteil von 0,6 % bis 3 % Mangan in der Druckfarbe enthalten, wobei diese Anteile in Öl gelöst sind. Das Cobalt wird in der Form von Kobaltoktoat mit der CAS-Nr. 136-52-7 und das Mangan in der Form von Manganbis(2-ethylhexanoat) mit der CAS-Nr. 13434-24-7 zugemischt.

Ferner ist ein Scheuerschutz mit einem Anteil von ca. 4 % in der Druckfarbe vorgesehen, wobei der Scheuerschutz insbesondere eine Scheuerpaste basierend auf Teflon und/oder Polyethylen und/oder Fischer-Tropsch-Wachs mit einem Anteil von ca. 25 % bis 40 % in Hartharz und/oder Alkydharz und/oder Öl ist. Das Öl ist dabei beispielsweise Mineralöl mit einem Siedebereich zwischen 280°C und 310°C. Es können auch pflanzliche Öle oder deren Derivate verwendet werden.

Der erfindungsgemäße Satz an Druckfarben gemäß dem zweiten Ausführungsbeispiel weist einen sehr hohen Pigmentanteil auf. Dadurch läßt sich ein hoher Dichteumfang beim Drucken erreichen.

Der Satz an Druckfarben gemäß dem zweiten Ausführungsbeispiel weist folgende Eigenschaften auf:

| Farbton | Dichte | Schichtdicke [g/m²] | Glanzpunkte 60° | Tack | Viskosität 23°C, 1/10s [Pa s] |
|---|---|---|---|---|---|
| Gelb (Yellow) | 2,0 | 1,4 | 69,7 | 9 | 100 |
| Cyan | 2,5 | 1,36 | 50,8 | 11 | 110 |
| Rot | 2,4 | 1,61 | 54,6 | 12 | 90 |
| Schwarz | 3,0 | 1,76 | 69,6 | 9 | 62 |

Die gezeigten Dichtewerte sind Standarddichten. Zur Erreichung des optimalen Druckes muß die Druckfarbe mit diesen Standarddichtewerten gedruckt werden. Es wäre dabei optimal, wenn die Druckfarbe mit dem Farbton Gelb eine Dichte von 2,3 aufweisen würde. Ein solcher Farbton ist aber für das menschliche Auge nicht mehr unterscheidbar von einem solchen mit der Dichte 2,0, so daß die Druckfarbe im Farbton Gelb entsprechend so gemischt wird, daß die Dichte erniedrigt ist. Durch den geringeren Pigmentanteil im Vergleich zu einer Dichtevorgabe 2,3 läßt sich die Druckfarbe billiger herstellen und für den Drucker leichter handhaben.

Trotz der sehr hohen Pigmentierung weist der Satz von Druckfarben gemäß dem zweiten Ausführungsbeispiel einen unerwartet hohen Glanz auf. Die Farben weisen eine gute Übertragungsfähigkeit auf das Papier auf, wie die hohe Schichtdicke zeigt. Es tritt wie bereits oben beschrieben solch ein Punktzuwachs bei hohen Dichten auf, der vorteilhaft für das Drucken ist.

Der Satz von Druckfarben ist so eingestellt, daß sich ein optimales Ergebnis bei der Druckreihenfolge Cyan, Rot, Gelb und zuletzt Schwarz erzielen läßt.

Der Farbraum dieses Satzes von Druckfarben gemäß dem zweiten Ausführungsbeispiel ist erheblich größer als beispielsweise der Farbraum 10. In Figur 6 ist ein Farbraum 26 bei einem Dichteumfang von 2,8 beim Druck gezeigt; zum Vergleich sind die Farbräume 10 und 16 ebenfalls eingezeichnet. Man sieht, daß die Gestalt des Umfangs des Farbraums 26 deutlich von den Farbräumen 10 und 16 abweicht.

Auch hier wiederum ist an den Satz von Druckfarben eine spezielle Transformationstabelle für die Umrechnung des ersten Farbraums 18 mit RGB-Skalenfarben in den zweiten Farbraum 20 mit CMYK-Skalenfarben angepaßt.

Die Bezeichnung CMYK wird auch für das zweite Ausführungsbeispiel beibehalten, obwohl Magenta dort durch einen roten Farbton ersetzt ist.

Das Farbensystem gemäß dem zweiten Ausführungsbeispiel stellt keine Euroskala mehr dar, da Magenta durch ein deutlich transparenteres und blaueres Pigment ganz oder teilweise ersetzt ist. Der erfindungsgemäße Satz an Druckfarben gemäß dem zweiten Ausführungsbeispiel läßt sich vorteilhafterweise für Drucke mit hohem Dichteumfang insbesondere in der Größenordnung von 2,4 bis 3,0 verwenden.

Der Kontrast eines Bildes läßt sich über den Dichteumfang messen. Ein Diapositiv hat beispielsweise einen wahrnehmbaren Dichteumfang in der Größenordnung von 2,9 und eine Fotografie einen Dichteumfang von etwa 2,4. Im Druckbereich herrscht die Meinung, daß ein Dichteumfang von etwa 1,8 eine Grenze beim Drucken darstellt; siehe dazu beispielsweise Helmut Teschner, Offset-Drucktechnik, Fachschriftenverlag, 10. Auflage 1997, Seite 6/10, linke Spalte.

Mit einem erfindungsgemäßen Farbensteuerungsverfahren in Zusammenwirkung mit dem erfindungsgemäßen Satz von Druckfarben lassen sich Druckumfänge von 2,2 oder größer erreichen, so daß sich beim Drucken Fotoqualität erreichen läßt. Es ergibt sich dadurch auch der große Vorteil, daß in der Drucktechnik sich Methoden anwenden lassen, wie sie in der Fotografie bekannt sind.

Das erfindungsgemäße Farbensteuerungsverfahren für den Offset-Druck funktioniert wie folgt:

Zur Transformation des ersten Farbraums 18 mit den Skalenfarben R, G, B in den zweiten Farbraum 20 mit den Skalenfarben C, M, Y, K ist eine Transformationstabelle 22 erforderlich. Die R, G, B-Werte liegen dabei in der Vorlage vor, und die C, M, Y, K-Farbtöne werden durch die Druckfarben beim Offset-Druck bereitgestellt; der Farbeindruck des Druckbildes entsteht durch autotypische Farbmischung. Eine solche Farbtabelle ist als ICC-Profil bekannt (ICC - International Colour Consortium).

Erfindungsgemäß wird die Transformationstabelle nun gezielt modifiziert. Um mit höherem Dichteumfang drucken zu können, muß der Farbraumumfang des zweiten Farbraumumfanges 20 derart mit der optischen Dichte der C, M, Y, K korreliert sein, daß der Farbraumumfang des zweiten Farbraums bei Erhöhung des Dichteumfangs beim Druck zunimmt. Dadurch ist gewährleistet, daß die Farben im Zusammendruck bei zunehmendem Dichteumfang nicht verschmutzen.

Es hat sich gezeigt, daß eine optimale Korrelation zwischen Dichteumfang und Farbraumumfang erreicht ist, wenn der Dichteabstand zwischen Schwarz und der dichtesten Buntfarbe 0,5 ist. Dieser ermittelte Wert 0,5 ist ein physiologischer Wert, der durch das Farbsehsystem des Menschen bestimmt ist, d. h. durch die Ausbildung und Anordnung von Stäbchen und Zäpfchen in der Netzhaut und der Verarbeitung der Sinneseindrücke im Gehirn. Die Transformationstabelle 22 wird so bestimmt, daß stets dieser Abstand von 0,5 vorliegt.

Es hat sich weiterhin gezeigt, daß vorteilhafterweise zur Korrelation des Dichteumfangs mit dem Farbraum der Abstand der optischen Dichte in der Dichte benachbarter Buntfarben 0,1 betragen soll oder, wenn dieser Abstand größer als 0,1 ist, möglichst dicht bei 0,1 liegt. Beispielsweise wäre es vorteilhaft, wenn Gelb gemäß dem zweiten Ausführungsbeispiel die Dichte 2,3 aufweist. Eine solche gelbe Farbe ist jedoch nicht mehr unterscheidbar von einer mit dem Dichtewert 2,0, so daß 2,0 gewählt wird.

Weiterhin sollte, um einen hohen Dichteumfang des Druckes zu erreichen, die optische Dichte von Schwarz bezogen auf eine Standarddichte mindestens 2,4 sein.

Die erfindungsgemäßen Sätze von Druckfarben erfüllen diese Anforderungen, d. h. mit ihnen lassen sich die Vorgaben erreichen und in Zusammenwirkung mit einer entsprechenden Transformationstabelle 22 lassen sich optimale Druckergebnisse mit einem Dichteumfang von mindestens 2,2 und sogar 2,4 insbesondere für den Satz von Druckfarben gemäß dem zweiten Ausführungsbeispiel erreichen. Ein derartig hergestelltes Druckbild hat dann den Informationsgehalt eines Fotos bezüglich des Kontrastumfangs.

Die Transformationstabelle 22 wird dabei insbesondere auch so modifiziert, daß sich die Gestalt des Farbraums bei einer Änderung des Dichteumfangs (vgl. Figur 4) im wesentlichen nicht ändert. Dadurch läßt sich der Dichteumfang eines Bilds gezielt steuern, wobei durch eine Dichteänderung sämtliche Farbtöne betroffen sind, d. h. einheitlich der Kontrast vergrößerbar oder verkleinerbar ist. Durch Einstellung der Dichte einer Skalenfarbe läßt sich dadurch der Dichteumfang beim Druck einstellen. Es läßt sich dadurch eine einheitliche Änderung des Druckumfangs um einen bestimmten Wert durch Änderung der Dichte jeder Skalenfarbe durch jeweils im wesentlichen den gleichen Wert bewirken. Dadurch läßt sich der Kontrastumfang eines Bilds gezielt verändern, so wie in der Fotografie durch Öffnen oder Schließen einer Blende der Kontrastumfang eines Bilds veränderbar ist. Bei bisherigen Druckverfahren war es so, daß bei Änderung des Dichteumfangs sich der Farbeindruck verändern konnte (vgl. Figur 1) oder, wenn jeweils die Dichte einer Skalenfarbe verändert wurde, dadurch nicht direkt oder zumindest nicht gezielt der Druckumfang verändert wurde.

Bei dem erfindungsgemäßen Farbensteuerungsverfahren in Zusammenwirkung mit den erfindungsgemäßen Farben kann ein Drucker gezielt den Druckumfang verändern, indem er beispielsweise den Dichteumfang jeder Skalenfarbe um einen bestimmten Wert wie 0,3 erniedrigt. Dadurch erniedrigt sich auch einheitlich der Dichteumfang des Druckbildes.

Zu einem vorgegebenen Satz von Druckfarben wird in einer Andruckmaschine ein Druck mit einem bestimmten Dichteumfang erzeugt. Am Druckbild werden mit einem Farbmetrikmeßgerät die Eckpunkte des Farbraums und damit der Farbraumumfang bestimmt. Weist der Farbraum die geforderte Spezifikation auf, d. h. vergrößert er sich bei Dichteumfängen größer als 1,8 und ist er insbesondere bei Dichteumfängen in der Größenordnung 2,2 bis 2,4 oder 2,8 bis 3,0 vergrößert, dann wird bei vorgegebenem Dichteumfang die Transformationstabelle 22 bestimmt.

Die Transformationstabelle 22 muß die Transformation von dem ersten Farbraum in den erweiterten zweiten Farbraum durchführen können.

Die Anpassung der Transformationstabelle 22 wird so durchgeführt, daß von einer vorbekannten Tabelle ausgegangen wird, dann die Farbraumvalenzen des zweiten Farbraums ausgedruckt und vermessen werden, und iterativ bestimmte Tabellenwerte so modifiziert werden, daß sich der Farbraumumfang des zweiten Farbraums bei Erhöhung des Dichteumfangs erweitert, wobei der Dichteabstand von 0,5 zwischen Schwarz und der dichtesten Buntfarbe festgehalten wird. Insbesondere muß eine Modifikation gegenüber bekannten Tabellen im Bereich von Blau und Rosa durchgeführt werden (vgl. Figur 1).

## Patentansprüche

1. Satz von Druckfarben, welcher die Farbtöne Yellow (Y), Rot oder Magenta (M), Cyan (C) und Schwarz (K) umfaßt,
**dadurch gekennzeichnet**, daß der Abstand der optischen Dichte der Druckfarbe mit dem Farbton Schwarz zu der Dichte der Druckfarbe mit dem dichtesten Buntton im Druck 0,5 ist.

2. Satz von Druckfarben nach Anspruch 1, dadurch gekennzeichnet, daß der Farbton der dichtesten Buntfarbe Cyan ist.

3. Satz von Druckfarben nach Anspruch 1 oder 2, dadurch gekennzeichnet, daß der Abstand der optischen Dichte zwischen Buntfarben mit benachbarten Dichtewerten 0,1 ist oder, wenn dieser Abstand größer ist, möglichst dicht bei 0,1 liegt.

4. Satz von Druckfarben nach einem der vorangehenden Ansprüche, dadurch gekennzeichnet, daß die optische Dichte der Druckfarbe mit dem Farbton Schwarz im Druck mindestens 2,3 ist.

5. Satz von Druckfarben insbesondere nach einem der Ansprüche 1 bis 4, wobei eine Druckfarbe aus einer Mischung von Bindemitteln, von Farbmitteln und von Druckhilfsmitteln hergestellt ist, dadurch gekennzeichnet, daß der Farbmittelanteil als Pigmentanteil im Bereich zwischen 10 % und 30 % liegt.

6. Satz von Druckfarben nach Anspruch 5, dadurch gekennzeichnet, daß der Bindemittelanteil im Bereich zwischen 55 % und 80 % liegt.

7. Satz von Druckfarben nach Anspruch 5 oder 6, dadurch gekennzeichnet, daß der Anteil an Druckhilfsmitteln im Bereich zwischen 5 % und 15 % liegt.

8. Satz von Druckfarben nach einem der Ansprüche 5 bis 7,
dadurch gekennzeichnet, daß die Bindemittel phenolmodifiziertes Kolophoniumharz gelöst in Öl umfassen.

9. Satz von Druckfarben nach Anspruch 8, dadurch gekennzeichnet, daß der Anteil an phenolmodifiziertem Kolophoniumharz gelöst in Öl in einer Druckfarbe im Bereich zwischen 45 % und 70 % liegt.

10. Satz von Druckfarben nach einem der Ansprüche 5 bis 9,
dadurch gekennzeichnet, daß der Pigmentanteil bei der Druckfarbe mit Farbton Cyan im Bereich zwischen 15 % und 22 % liegt.

11. Satz von Druckfarben nach einem der Ansprüche 5 bis 10,
dadurch gekennzeichnet, daß der Pigmentanteil bei der Druckfarbe mit Farbton Magenta im Bereich zwischen 17 % und 25 % liegt.

12. Satz von Druckfarben nach einem der Ansprüche 5 bis 11,
dadurch gekennzeichnet, daß der Pigmentanteil der Druckfarbe mit Farbton Yellow im Bereich zwischen 12 % und 20 % liegt.

13. Satz von Druckfarben nach einem der Ansprüche 5 bis 12,
dadurch gekennzeichnet, daß der Rußanteil bei der Druckfarbe Schwarz zwischen 17 % und 25 % liegt.

14. Satz von Druckfarben nach Anspruch 13, dadurch gekennzeichnet, daß die Druckfarbe mit Farbton Schwarz einen Anteil von 2 % bis 10 % an EuroBlau und/oder EuroRot und/oder Reflexblau zur Schönung enthält.

15. Satz von Druckfarben nach einem der Ansprüche 5 bis 14,
dadurch gekennzeichnet, daß die Bindemittel sojaölbasierendes Alkydharz mit einer Öllänge im Bereich zwischen 50 % und 70 % umfassen.

16. Satz von Druckfarben nach Anspruch 15, dadurch gekennzeichnet, daß der Anteil an sojaölbasierendem Alkydharz mit einer Öllänge im Bereich zwischen 50 % und 70 % bei ca. 3 % bis 10 % in einer Druckfarbe liegt.

17. Satz von Druckfarben nach einem der Ansprüche 5 bis 16,
dadurch gekennzeichnet, daß die Bindemittel leinölbasierendes Alkydharz mit einer Öllänge im Bereich zwischen 60 % und 80 % umfassen.

18. Satz von Druckfarben nach Anspruch 17, dadurch gekennzeichnet, daß der Anteil an leinölbasierendem Alkydharz mit einer Öllänge von ca. 70 % bei ca. 3 % bis 10 % liegt.

19. Satz von Druckfarben nach einem der Ansprüche 5 bis 18,
dadurch gekennzeichnet, daß die Bindemittel leinöl- und holzölbasierendes Alkydharz mit einer Öllänge von ca. 50 % bis 70 % umfassen.

20. Satz von Druckfarben nach Anspruch 19, dadurch gekennzeichnet, daß der Anteil des leinöl- und holzölbasierenden Alkydharzes mit einer Öllänge von ca. 60 % bei ca. 3 % bis 10 % liegt.

21. Satz von Druckfarben nach einem der Ansprüche 5 bis 20,
dadurch gekennzeichnet, daß die Druckhilfsmittel ein Antioxidans umfassen.

22. Satz von Druckfarben nach Anspruch 21, dadurch gekennzeichnet, daß der Anteil des Antioxidans in der Druckfarbe bei ca. 0,25 % bis 3 % liegt.

23. Satz von Druckfarben nach einem der Ansprüche 5 bis 22,
dadurch gekennzeichnet, daß die Druckhilfsmittel Leinöl umfassen.

24. Satz von Druckfarben nach Anspruch 23, dadurch gekennzeichnet, daß der Anteil des Leinöls in der Druckfarbe bei ca. 1 % bis 5 % liegt.

25. Satz von Druckfarben nach einem der Ansprüche 5 bis 24,
dadurch gekennzeichnet, daß die Druckhilfsmittel einen Trockner umfassen.

26. Satz von Druckfarben nach Anspruch 25, dadurch gekennzeichnet, daß der Trockner in Öl gelöste Metallsalze mit einem Anteil 0,8 % bis 4 % bezogen auf eine Druckfarbe umfaßt.

27. Satz von Druckfarben nach Anspruch 25 oder 26, dadurch gekennzeichnet, daß der Trockner eine Cobalt-Mangan-Mischung in Mineralöl und/oder Leinöl und/oder anderen pflanzlichen Ölen und/oder deren Derivaten ist.

28. Satz von Druckfarben nach Anspruch 27, dadurch gekennzeichnet, daß der Cobaltanteil zwischen 0,2 % und 1 % und/oder der Mangananteil bei 0,6 % bis 3 % bezogen auf eine Druckfarbe ist.

29. Satz von Druckfarben nach einem der Ansprüche 5 bis 28,
dadurch gekennzeichnet, daß die Druckhilfsmittel einen Scheuerschutz umfassen.

30. Satz von Druckfarben nach Anspruch 29, dadurch gekennzeichnet, daß der Anteil des Scheuerschutzes in der Druckfarbe zwischen ca. 2 % und 8 % beträgt.

31. Satz von Druckfarben nach Anspruch 29 oder 30, dadurch gekennzeichnet, daß der Scheuerschutz auf Teflon und/oder Polyethylen und/oder Fischer-Tropsch-Wachs in Hartharz und/oder Alkydharz und/oder Öl basiert.

32. Satz von Druckfarben nach Anspruch 31, dadurch gekennzeichnet, daß der Teflon und/oder Polyethylen und/oder Fischer-Tropsch-Wachs-Anteil im Scheuerschutz ca. 25 % bis 40 % beträgt.

33. Satz von Druckfarben nach einem der Ansprüche 5 bis 32,
dadurch gekennzeichnet, daß die Standarddichte im Druck für die Druckfarbe mit dem Farbton Yellow bei ca. 1,6 liegt.

34. Satz von Druckfarben nach einem der Ansprüche 5 bis 33,
dadurch gekennzeichnet, daß die Standarddichte im Druck für die Druckfarbe mit dem Farbton Magenta bei ca. 1,7 liegt.

35. Satz von Druckfarben nach einem der Ansprüche 5 bis 34,
dadurch gekennzeichnet, daß die Standarddichte im Druck für die Druckfarbe mit dem Farbton Cyan bei ca. 1,8 liegt.

36. Satz von Druckfarben nach einem der Ansprüche 5 bis 35,
dadurch gekennzeichnet, daß die Standarddichte im Druck für die Druckfarbe mit dem Farbton Schwarz bei ca. 2,3 liegt.

37. Satz von Druckfarben nach einem der vorangehenden Ansprüche, dadurch gekennzeichnet, daß die Druckreihenfolge Cyan, Magenta, Yellow, Schwarz ist.

38. Satz von Druckfarben insbesondere nach einem der Ansprüche 1 bis 4, wobei eine Druckfarbe aus einer Mischung eines Bindemittels, eines Farbmittels und von Druckhilfsmitteln hergestellt ist, dadurch gekennzeichnet, daß der Farbmittelanteil in einer Druckfarbe als Pigmentanteil im Bereich zwischen 15 % und 40 % liegt.

39. Satz von Druckfarben nach Anspruch 38, dadurch gekennzeichnet, daß der Bindemittelanteil in einer Druckfarbe im Bereich zwischen 35 % und 80 % liegt.

40. Satz von Druckfarben nach Anspruch 38 oder 39, dadurch gekennzeichnet, daß der Anteil an Druckhilfsmitteln in einer Druckfarbe im Bereich zwischen 5 % und 15 % liegt.

41. Satz von Druckfarben nach einem der Ansprüche 38 bis 40,
dadurch gekennzeichnet, daß die Bindemittel modifiziertes Phenolharz in Öl umfassen.

42. Satz von Druckfarben nach Anspruch 41, dadurch gekennzeichnet, daß der Bindemittelanteil an modifiziertem Phenolharz in Öl im Bereich zwischen 30 % und 70 % liegt.

43. Satz von Druckfarben nach einem der Ansprüche 38 bis 42,
dadurch gekennzeichnet, daß der Pigmentanteil bei der Druckfarbe mit dem Farbton Cyan im Bereich zwischen 20 % und 28 % liegt.

44. Satz von Druckfarben nach einem der Ansprüche 38 bis 43,
dadurch gekennzeichnet, daß der Pigmentanteil bei der Druckfarbe mit dem Farbton Rot im Bereich zwischen 25 % und 40 % liegt.

45. Satz von Druckfarben nach einem der Ansprüche 38 bis 44,
dadurch gekennzeichnet, daß der Pigmentanteil bei der Druckfarbe mit dem Farbton Yellow im Bereich zwischen 16 % und 25 % liegt.

46. Satz von Druckfarben nach einem der Ansprüche 38 bis 45,
dadurch gekennzeichnet, daß der Rußanteil bei der Druckfarbe mit dem Farbton Schwarz im Bereich zwischen 18 % und 27 % liegt.

47. Satz von Druckfarben nach Anspruch 46, dadurch gekennzeichnet, daß die Druckfarbe mit dem Farbton Schwarz einen Anteil von 5 % bis 15 % an EuroBlau und/oder EuroRot und/oder Reflexblau enthält.

48. Satz von Druckfarben nach einem der Ansprüche 38 bis 47,
dadurch gekennzeichnet, daß die Bindemittel auf Leinöl und Holzöl basierendes Alkydharz mit einer Öllänge von ca. 50 % bis 70 % umfassen.

49. Satz von Druckfarben nach Anspruch 48, dadurch gekennzeichnet, daß der Anteil an auf Leinöl und Holzöl basierendem Alkydharz mit einer Öllänge von ca. 50 % bis 70 % in einer Druckfarbe bei ca. 5 % bis 15 % liegt.

50. Satz von Druckfarben nach einem der Ansprüche 38 bis 49,
dadurch gekennzeichnet, daß die Bindemittel leinölbasierendes Alkydharz mit einer Öllänge von ca. 68 % bis 78 % umfassen.

51. Satz von Druckfarben nach Anspruch 50, dadurch gekennzeichnet, daß der Anteil des leinölbasierenden Alkydharzes mit einer Öllänge von ca. 73 % in einer Druckfarbe bei ca. 3 % bis 15 % liegt.

52. Satz von Druckfarben nach einem der Ansprüche 38 bis 51,
dadurch gekennzeichnet, daß die Bindemittel leinölbasierendes und sojaölbasierendes Alkydharz mit einer Öllänge von ca. 72 % bis 82 % umfassen.

53. Satz von Druckfarben nach Anspruch 52, dadurch gekennzeichnet, daß der Anteil an leinölbasierendem und sojaölbasierendem Alkydharz mit einer Öllänge von ca. 77 % in einer Druckfarbe bei ca. 3 % bis 15 % liegt.

54. Satz von Druckfarben nach einem der Ansprüche 38 bis 53,
dadurch gekennzeichnet, daß die Druckhilfsmittel einen Trockner umfassen.

55. Satz von Druckfarben nach Anspruch 54, dadurch gekennzeichnet, daß der Trockner in Öl gelöste Metallsalze umfaßt, wobei der Metallanteil bezogen auf eine Druckfarbe zwischen 0,8 % und 4 % liegt.

56. Satz von Druckfarben nach Anspruch 55, dadurch gekennzeichnet, daß der Trockner eine Cobalt-Mangan-Mischung in Öl umfaßt.

57. Satz von Druckfarben nach Anspruch 56, dadurch gekennzeichnet, daß der Cobaltanteil bei ca. 0,2 % bis 1 % und der Mangananteil bei 0,6 % bis 3 % bezogen auf eine Druckfarbe ist.

58. Satz von Druckfarben nach einem der Ansprüche 38 bis 57,
dadurch gekennzeichnet, daß die Druckhilfsmittel einen Scheuerschutz umfassen.

59. Satz von Druckfarben nach Anspruch 58, dadurch gekennzeichnet, daß der Anteil des Scheuerschutzes an einer Druckfarbe bei ca. 2 % bis 8 % liegt.

60. Satz von Druckfarben nach Anspruch 58 oder 59, dadurch gekennzeichnet, daß der Scheuerschutz auf Teflon und/oder Polyethylen und/oder Fischer-Tropsch-Wachs in Hartharz und/oder Alkydharz und/oder Öl basiert.

61. Satz von Druckfarben nach Anspruch 60, dadurch gekennzeichnet, daß der Anteil an Teflon und/oder Polyethylen und/oder Fischer-Tropsch-Wachs im Scheuerschutz bei ca. 25 % bis 40 % liegt.

62. Satz von Druckfarben nach einem der Ansprüche 38 bis 61,
dadurch gekennzeichnet, daß die Standarddichte im Druck bei der Druckfarbe mit dem Farbton Yellow bei ca. 2,0 liegt.

63. Satz von Druckfarben nach einem der Ansprüche 38 bis 62,
dadurch gekennzeichnet, daß die Standarddichte im Druck bei der Druckfarbe mit dem Farbton Rot bei ca. 2,4 liegt.

64. Satz von Druckfarben nach einem der Ansprüche 38 bis 63,
dadurch gekennzeichnet, daß die Standarddichte im Druck der Druckfarbe mit dem Farbton Cyan bei ca. 2,5 liegt.

65. Satz von Druckfarben nach einem der Ansprüche 38 bis 64,
dadurch gekennzeichnet, daß die Standarddichte im Druck der Druckfarbe mit dem Farbton Schwarz bei ca. 3,0 liegt.

66. Satz von Druckfarben nach einem der Ansprüche 38 bis 65,
dadurch gekennzeichnet, daß die Druckreihenfolge Cyan, Rot, Yellow, Schwarz ist.

67. Farbensteuerungsverfahren für den Offset-Druck, bei welchem ein erster Farbraum mittels einer Transformationstabelle in einen zweiten Farbraum transformiert wird, wobei eine Vorlage Farbvalenzen des ersten Farbraums umfaßt und die Farbtöne der Druckfarben Skalenfarben der zweiten Farbraums sind,
**dadurch gekennzeichnet**, daß die Transformationstabelle so bestimmt ist, daß der Farbraumumfang des zweiten Farbraums derart mit der optischen Dichte der Skalenfarben korreliert ist, daß der Farbraumumfang des zweiten Farbraums bei Erhöhung des Dichteumfangs beim Druck zunimmt.

68. Farbensteuerungsverfahren nach Anspruch 67, dadurch gekennzeichnet, daß der Abstand der optischen Dichte der dichtesten Buntfarbe zu Schwarz im Druck 0,5 ist.

69. Farbensteuerungsverfahren nach Anspruch 67 oder 68,
dadurch gekennzeichnet, daß der Abstand der optischen Dichte benachbarter Buntfarben 0,1 ist oder, wenn dieser Abstand größer als 0,1 ist, möglichst dicht bei 0,1 liegt.

70. Farbensteuerungsverfahren nach einem der Ansprüche 67 bis 69, dadurch gekennzeichnet, daß die optische Dichte von Schwarz bezogen auf eine Standarddichte mindestens 2,4 ist.

71. Farbensteuerungsverfahren nach einem der Ansprüche 67 bis 70, dadurch gekennzeichnet, daß der Dichteumfang beim Druck mindestens 2,2 ist.

72. Farbensteuerungsverfahren nach einem der Ansprüche 67 bis 71, dadurch gekennzeichnet, daß die optische Dichte von Schwarz bezogen auf eine Standarddichte 2,4 ist.

73. Farbensteuerungsverfahren nach einem der Ansprüche 67 bis 71, dadurch gekennzeichnet, daß die optische Dichte von Schwarz bezogen auf eine Standarddichte 3,0 ist.

74. Farbensteuerungsverfahren nach einem der Ansprüche 67 bis 72, dadurch gekennzeichnet, daß der Farbraumumfang des zweiten Farbraums bei einem Dichteumfang bis ca. 1,9 im wesentlichen einer Euroskala entspricht.

75. Farbensteuerungsverfahren nach einem der Ansprüche 67 bis 74, dadurch gekennzeichnet, daß der erste Farbraum ein R, G, B-Farbraum und der zweite Farbraum ein C, M, Y, K-Farbraum ist.

76. Farbensteuerungsverfahren nach einem der Ansprüche 67 bis 75, dadurch gekennzeichnet, daß der Dichteumfang beim Druck durch Einstellung der Dichte der Skalenfarben eingestellt wird.

77. Farbensteuerungsverfahren nach Anspruch 76, dadurch gekennzeichnet, daß eine einheitliche Änderung des Druckumfangs um einen bestimmten Wert durch Änderung der Dichte jeder Skalenfarbe durch jeweils im wesentlichen den gleichen Wert bewirkt wird.

78. Farbensteuerungsverfahren nach einem der Ansprüche 67 bis 77, dadurch gekennzeichnet, daß zur Bestimmung der Transformationstabelle von einer vorbekannten Tabelle ausgegangen wird, die Farbraumvalenzen des zweiten Farbraums ausgedruckt und vermessen werden, und iterativ so bestimmte Tabellenwerte modifiziert werden, daß sich der Farbraumumfang des zweiten Farbraums bei Erhöhung des Dichteumfangs erweitert.

79. Farbensteuerungsverfahren nach einem der Ansprüche 67 bis 78, dadurch gekennzeichnet, daß beim Drucken der Farbton Schwarz als letztes gedruckt wird.

80. Farbensteuerungsverfahren nach einem der Ansprüche 67 bis 79, dadurch gekennzeichnet, daß ein Satz von Druckfarben gemäß einem der Ansprüche 1 bis 66 verwendet wird.
